# EUROPEAN PATENT APPLICATION

(11) **EP 3 462 427 A1**
(43) Date of publication of application: **03.04.2019**
(21) Application number: 17193423.5
(22) Date of filing: 27.09.2017
(51) Int. Cl.: G08G 1/14, H04W 4/02, H04W 8/18, H04W 60/00

(54) **METHOD OF PREDICTING THE PROBABILITY OF OCCURRENCE OF VACANT PARKING SLOTS AND ITS REALIZATION SYSTEM**

(71) Applicant: Deutsche Telekom AG, 53113 Bonn (DE)
(72) Inventor: HAIS, Petr, Praha západ (CZ); VRBA, Pavel, 734 01 Karviná (CZ); BURIAN, Martin, 147 00 Praha 4 (CZ); KIRSCHNER, Filip, 252 41 Dolni Brezany (CZ)
(74) Representative: Vossius & Partner Patentanwälte Rechtsanwälte mbB

(57) **Abstract**

The invention is directed to predicting the probability of occurrence of vacant parking slots in cities, it uses signalling data for making the prediction from the operation of the cellular radio telecommunication networks of mobile operators. Information on the number of end devices present in the given locality together with information on their behavior is extracted from the signalling data, which are in strong correlation with the occupancy rate of parking slots in the given area. Furthermore, the invention presents a system (1), which automatically calculates the prediction of probability of occurrence of vacant parking slots in the given area.

## Description

The purpose of the invention is to predict the probability of occurrence of vacant parking slots at a given area in order to shorten the time required for parking a motor vehicle, including the system needed for the realization of the invention.

With an increasing number of cars, especially in urban areas, it is becoming more and more challenging to find a parking slot in the desired area, where the parking works on the "first comes first parks" basis. Drivers, who look for a parking place for their motor vehicle, have negative impact on the traffic flow and density, moreover combustion engines of cars, that go slow at the given place, pollute the local air, while the process of parking itself is stressful and unpleasant for many drivers, which increases the probability of damage to property and injury to persons involved in the traffic.

The listed issue has been tried to be solved by the invention registered under US 2016/0140845 A1, which presents a method of predicting vacant parking slots using advanced databases operated in computer systems. The advanced databases have a detailed description of the given area including the geographical description, description of walking distance to the points of interest, etc., including the occupancy rate of the given area by parked motor vehicles based on the day time, day of the week, as well as information from parking buildings and parking lots. The database is continuously supplied with new data describing the current situation from the messages of active users, data sent from local authorities, e.g. from video cameras, data from the parking places' operators, etc.

Some disadvantages of the listed solution include, that after the input of the initial data into the database, the database depends solely on the updating data, such as active input from the invention's users, data from video cameras and local authorities' systems, data from parking lots' operators, etc., which bear the information on the occupancy rate of the given area with motor vehicles at a given time.

Another known solution mentioned in the invention, registered under US 2014/0266800 A1, tries to solve the problem by collecting data from the users' mobile end devices or users' motor vehicles equipped with the end devices, e.g. the collection of data including GPS coordinates. The system is able to monitor parking at the given area through the knowledge of characteristic features of the given area and data received from the users. The more technologically advanced the user's end device is, the more detailed data the invention obtains for a more accurate assessment of the parking places' occupancy rate. From the large amount of obtained data the system is able to determine not only the presence of the users, but also their behavior, which makes the monitoring more accurate, e.g. if a device generates data on the movement of a contributing user using accelerometers, gyroscopes or compass.

Disadvantages of the given solution are that the users have to actively contribute updating data into the system, while not every user is willing to give up a part of his/her daily data limit to contribute into the system. If the system would be attacked by a hacker, it is possible to actively track the given user, which is unacceptable from the privacy protection point of view. Finally, for the correct estimate of the probability of parking it is also important, that the number of active contributing users is as large as possible to enable a dense coverage and monitoring of the area.

Today, there are so called cellular (from the Latin "celula", a cell) radio telecommunication networks of mobile operators providing mobile telephone services. The telecommunication network radio signal coverage of a geographical area is divided into overlapping coverage cells, each cell is covered with radio signal from the so called base station, which is responsible for transmitting and receiving signal in the respective coverage cell. The radio signal propagation is influenced by the radio waves propagation environment, where radio waves behave differently in an open area and in an urban area, which affects the size and shape of the coverage cells. Apart from the radio waves propagation environment, the size of the coverage cells is also influenced by the density of end devices in the given area which are connected into the cellular telecommunication network. The higher the density of end devices in the area is, the more base stations there need to be, dividing the given area into a larger number of small coverage cells.

The aforementioned indicates that in urban areas, especially in cities, there is a very dense network of base stations for the mobile operator telecommunication network operation, which divides the geographical characteristics of the area into a detailed mosaic of sectors, where each sector belongs under one assigned dominant base station. Users' end devices connected to the telecommunication network, such as standard phones, smart phones, computers, tablets, etc., and additionally end devices falling into the Internet of things category, have to communicate with the telecommunication network through the dominant base station operating the given sector, where the end devices are currently positioned from the geographical perspective.

During its standard operation a telecommunication network produces so called signalling data, which bear information that the end device is connected into the telecommunication network through dominant base station, or they bear information that a certain operation with the end device has been realized, e.g. SMS receipt, telephone call, connection to the Internet, etc. Signalling data bearing information about connection of end device into the telecommunication network are obtained even if the end device is not in active use, because telecommunication networks check the connection of end devices on a periodical basis. Signalling data are anonymous from the end device's operation perspective, while end device is viewed for the sake of the network as a unique virtual entity connected to the communication network without any information enabling identification of the end device's owner or the subject of the end device's activity.

Even though mobile operators' telecommunication networks differ based on the used technology, e.g. telecommunication networks type 2G, 3G, 4G, 5G, etc., all technological solutions of telecommunication networks bear one common feature, it is always necessary to build radio coverage of a geographical area with base stations, and always when an end device connects to the network, signalling data are generated.

The object of the present invention is to establish a method of predicting the probability of occurrence of vacant parking slots in the given area and the system for enabling the method, which would use the signalling data of at least one telecommunication network, which would have a high prediction success rate as far as probability of occurrence of vacant parking slots, and which would surpass the limitations and disadvantages of the known inventions.

### SUMMARY OF THE INVENTION:

The object is solved by method of prediction of probability of occurrence of vacant parking slots in the given area established according to the following invention.

In accordance with an aspect of the present invention, the above and other objects can be accomplished by the provision of a method of predicting the probability of occurrence of vacant parking slots in the given area for shortening the time required for finding a place to park a motor vehicle, where at first a request for making the prediction of probability for the given area is submitted, then the prediction of probability of occurrence of vacant parking slots is executed by comparing the official number of parking slots in the given area with the current number of persons and motor vehicles present in the area, then the result is published, the method further comprises the use of signalling data for making the prediction from at least one cellular radio telecommunication network as a source of information on persons and motor vehicles in the given area.

The method may further comprise the use of signalling data from an established connection between base stations of a cellular radio telecommunication network and end devices connected to the telecommunication network, while the individual connected end devices are viewed as individual virtual entities, whose behavior is analyzed from the signalling data.

The method may further comprise the categorization of virtual entities before the actual prediction of probability, then the signalling data from the virtual entities not affecting the probability of occurrence of vacant parking slots in the given area at the given time are filtered out still before the execution of the prediction.

The method may further comprise the use of at least one assumption of the current actual occupancy rate of parking slots in the given area in making the prediction of probability in order to make the prediction more accurate, which is made based on the statistical processing of the archived signalling data set.

The method may further comprise the use of experimentally obtained data on the actual state of the occupancy rate of parking slots in the given area during the preparation of the assumption of the current actual occupancy rate of parking slots in the given area while the amount of archived signalling data is insufficient, for bridging the period of time required for acquiring the sufficient set of archived signalling data.

The method may further comprise the use of experimentally obtained data on the actual state of the occupancy rate of parking slots in the given area when the assumption of the current actual occupancy rate of parking slots in the given area is devalued due to the change in the official number of parking slots in the given area, for bridging the period of time required for acquiring the sufficient set of archived signalling data.

The method may further comprise the use of feedback information from motor vehicles drivers on the results of the previous predictions of probability in the given area for making the prediction of probability more accurate when executing the prediction of probability for the given area.

The method may further comprise the use of supplementary information on the current facts affecting the behavior of persons and motor vehicles while making the prediction of probability, to make the prediction more accurate.

The supplementary information may include at least one influence from the group, such as weather, road restrictions, national holidays, summer vacations, working vacations. The supplementary information may comprise information on cultural events, social events and sport events.

The method may further comprise the use of information on an object of interest located in the given area when executing the prediction of probability, where the results of the prediction of information on the object of interest may be published together with the results of the prediction.

In accordance with another aspect of the present invention, there is provided a system for executing the method of prediction of probability of occurrence of vacant parking slots in a given area for shortening the time required for finding a place to park a motor vehicle; the system comprising at least one server connected to the Internet, equipped with at least one data storage device with at least one database and at least one software module, comprising at least one user device connected to the Internet for the communication between the user device and the server, the system further comprises at least one signalling data database stored in the data storage device for the receiving and archiving of signalling data from the cellular radio telecommunication network, and at least one map background database comprising the geographical description of the area, out of which the given areas are selected, to include data on the official number of parking slots in the given areas, and at least one prediction software module for an automatic execution of the prediction of probability of occurrence of vacant parking slots in the given area from signalling data.

The system may further comprise a virtual entities categories database stored in the data storage device, together with the prediction software module comprising algorithm for the identification of behavior of virtual entities from signalling data.

The system may further comprise a statistics software module stored in the data storage device for making assumptions on a current occupancy rate of parking slots in the given area from archived signalling data, and a long-term statistic states database for saving the assumptions from the statistics software module.

The system may further comprise a training database stored in the data storage device with experimentally obtained data on an actual state of the occupancy rate of parking slots in the given area.

The user device may be equipped with at least one data storage device with the feedback software module for submitting data from the users into the long-term statistics states database.

The system may further comprise at least one supplementary database stored in the data storage device comprising data from at least one group such as the weather, data on road closures, national holidays and important days, data on sport events, cultural events and data on social events.

The system may be further equipped with at least one social software module for the collection of data from social networks stored in the data storage device.

The system may further comprise users' points of interest database stored in the data storage device for linking information on the users' points of interest in the given area to the prediction of probability results in the given area.

The prediction software module may comprise a computer program for an automatic execution of the following sequential steps: determining the given area from the received request for prediction; finding the given area in the map background database including the determination of the official number of parking slots in the given area; finding current signalling data in the signalling data database identification and monitoring of the virtual entities' behavior from the signalling data; filtering virtual entities not affecting the occupancy rate of parking slots out;using assumption of the current actual occupancy rate of parking slots in the given area; reviewing the actual behavior of entities in the given area with the assumption of the current actual occupancy rate of parking slots in the given area; determining the probability of occurrence of vacant parking slots in the given area; and publishing the results of prediction of probability.

The statistics software module may comprise a computer program for an automatic execution of the following sequential steps: determining the given area and uploading information on the official number of parking slots; separating of day time into separate time periods; uploading all archived signalling data for the given area into the signalling data database and/or the data from the training database with the experimentally obtained data on the actual state of the occupancy rate of parking slots in the given area; statistic assessment of the virtual entities' behavior in the given area for each individual period of day time; making an assumption for the given area and for each individual period of day time; and saving the assumptions into the long-term statistics states database.

The social software module may comprise a computer program for the automatic execution of the following sequential steps: connecting to at least one social network; collecting of data on social events, sport events, cultural events; sorting the collected data based on the given area and times of the events out; and saving data in the supplementary database.

To predict the probability of occurrence of vacant parking slots in the given area to shorten the time of looking for the place to park a motor vehicle, at first, a request for making the prediction of probability in the given area must be received. Consequently the prediction of probability of occurrence of vacant parking slots in the given area will be made, comparing the official number of parking slots in the given locality with the current number of persons and motor vehicles present in the given area. Then the result of the prediction gets published.

The subject matter of an invention is to use signalling data for making the prediction from at least one cellular telecommunication radio network as a source of information on persons and motor vehicles in the given area.

Using signalling data is practical due to the fact that the signalling data are generated permanently for all end devices connected to the telecommunication network with no need for interaction from the users themselves. Information included in signalling data comprise a very complex set of data provided by every end device located in the given area. Due to the fact that the cellular telecommunication network divides the geographical area into a mosaic of sectors, it is possible to sort out the signalling data according to the respective localities. The invention surpasses shortfalls of current technology by not requiring the necessity for active participation by the users, as well as it does not require installation of any supplementary sources of updating data, such as cameras, boom gates, sensors, etc.

In the advantageous version of the invention-based system signalling data are used from the connection between the cellular telecommunication network base stations and the end devices connected to the telecommunication network, the individual connected end devices are viewed as virtual entities, while at the same time the behavior of the virtual entities is analyzed from the signalling data. The base stations serve individual sectors dividing the geographical area into a mosaic where the end devices are located. The signalling data analysis enable the determination of the virtual entities' behavior, while it is possible to find out from the signalling data whether an entity has been moving over the geographical area or has stayed in place, and if it has moved, what pattern movement has followed. It is also practical that signalling data from various generations of telecommunication networks may be used, although they differ in the mosaic of sectors covered by radio signal, the intersection of the two signalling data sets improves the accuracy in the determination and tracking of the virtual entities' behavior.

In the advantageous version of the invention-based system before the prediction of probability is made, the virtual entities will be categorized, and then still prior to the prediction the virtual entities not affecting the probability of occurrence of vacant parking slots in the given area will be filtered out from the signalling data too. It is obvious that by filtering entities out with behavior not affecting the occupancy rate of the parking slots in the given area the volume of processed data will decrease and the prediction calculation will become easier and more accurate.

In the advantageous version of the invention-based system, while executing the prediction of probability at least one assumption of the current actual occupancy rate of parking slots in the given area will be used for making the prediction more accurate, which is based on the statistical processing of the archived signalling data set. This is practical due to the fact that the official number of parking slots in the real world is lower due to the parked vehicles. The number of parked vehicles changes during the day, while this change in the number of parking slots may be anticipated from the behavior of the virtual entities during the day or other period of time, and statistically assessed from the archived signalling data.

In the advantageous version of the invention-based system, while preparing the assumption of the current actual occupancy rate of parking slots in the given area and if the amount of the archived signalling data is insufficient, experimentally obtained information on the actual state of the occupancy rate of parking slots in the area will be used for bridging the period of time needed for acquiring a sufficient set of archived signalling data. The experimentally obtained data, acquired by observation of the given area for individual periods of time, bear information on the actual occupancy rate of parking slots, which is assigned to the virtual entities' behavior, which is archived on a regular basis.

In the advantageous version of the invention-based system, in case the assumptions of the current actual occupancy rate of parking slots in the given area get devalued due to the change in the official number of parking slots in the given area, experimentally obtained data on the actual state of the occupancy rate of parking slots in the area will be used for bridging the period of time required for acquiring the sufficient set of archived signalling data. The change in the official number of parking slots results in the distortion of the prediction result when the assumptions bound to the original official number of parking slots are used, therefore it is practical to use the experimentally obtained data for making initial assumptions, before a sufficient amount of archived signalling data is obtained.

In the advantageous version of the invention-based system, while executing the prediction of probability for the given area, feedback information related to the results of previous predictions of probability in the given area from motor vehicle drivers will be utilized to make the prediction more accurate. In case a motor vehicle driver is not successful in finding vacant parking slots, e.g. due to the fact that in the given locality at the given time municipal waste is being collected and the parking slots which are normally vacant are filled with waste containers, the driver submits his/her feedback so that the invention will take this fact into account while making next prediction.

In the advantageous version of the invention-based system when making the prediction of probability, supplementary data on the current situation affecting the behavior of persons and motor vehicles will be used for making the prediction more accurate. Supplementary information relates to at least one feature from the group comprising the weather, road restrictions, national holiday, summer vacations, vacation from work. Supplementary information may consider e.g. the weather forecast, while it can be assumed, that rain may cause more people to come in the given location by car, or if a street with a significant number of parking slots is closed, the cars will move into neighboring streets, etc.

In the advantageous version of the invention-based system, the supplementary data comprising information on cultural events, social events and sport events. Certain kind of events may cause temporary restrictions in traffic or a high concentration of motor vehicles, which will in the short-term perspective, for the duration of the event, rapidly decrease the probability of occurrence of vacant parking slots.

In the advantageous version of the invention-based system, the system uses information on an object of interest from the given area for predicting the probability, whereupon the resulting predicted information on the object of interest will be published together with the result of the prediction. The advantages of linking information on the object of interest include that not only the information on possible parking is offered, but also information on something the driver might be interested in, e.g. if the driver likes music, he/she is given information that at the given time he may want to park close to a music store, if the driver wants to.

The invention also includes a system for the prediction of probability of occurrence of vacant parking slots in the given area to make the time period of looking for a place to park motor vehicles as short as possible.

The system for performing the method comprises at least one server connected to the Internet, which is equipped with at least one data storage device with at least one database and at least one software module. Furthermore, the system includes at least one user device connected to the Internet for the communication between the user device and server.

The subject matter of an invention consists in at least one signalling data database stored on a data storage device for the reception and archiving of signalling data from the cellular radio telecommunication network. Furthermore, on the data storage device there is also stored at least one map background database comprising the geographical description of the given area, from which the respective localities are selected, to include the official number of parking slots in the given localities. Finally, the data storage device comprises at least one prediction software module for an automatic execution of the prediction of probability of occurrence of vacant parking slots in the given area from signalling data. The system's advantage is its simplicity, it does not require any additional hardware located in the streets such as cameras, sensors, boom gates, etc. The system's basic version does not require active updating data input by the users.

In the advantageous version of the invention-based system there is stored in the data storage device the virtual entities categories database and at the same time the prediction software module comprising algorithm for the identification of the virtual entities' behavior from signalling data. Signalling data comprises information on all entities, while a large number of virtual entities does not affect the occurrence of vacant parking slots, e.g. children at schools, working people, etc. It is therefore practical to categorize the virtual entities to enable the system to work only with some categories of the virtual entities.

In the advantageous version of the invention-based system there is stored in the data storage device the statistics software module for making assumptions from the current actual occupancy rate of parking slots in the given area from the archived signalling data, and also the long-term statistic states database for storing the assumptions from the statistics software module. Due to the fact that the official number of parking slots is different from the actual occupancy rate, it is practical to include in the prediction calculation an assumption of how many vacant parking slots there actually are in the given area.

In the advantageous version of the invention-based system, in the data storage there is a training database with experimentally obtained data on the actual state of the parking slots occupancy rate at the given area. The system does not have sufficient data to make assumptions for new localities, it is therefore practical to use the training database in the system, which will replace the missing signalling data for the sake of statistical assumptions at the beginning. Using the training database brings advantages in situations where the official number of parking slots changes and the existing prediction causes errors in the system calculations.

In the advantageous version of the invention-based system the user device is equipped with at least one data storage device with the feedback software module for sending the data from users to the long-term statistic states database. The user's device is also equipped with an application enabling sending the user's prediction evaluation in the given area. When some areas report frequent dissatisfaction, it is practical to make a field research, or try to identify the fault straight from the users' feedback information.

In the advantageous version of the invention-based system there is at least one supplementary database stored in the data storage device comprising data on weather, road closures, data on national holidays and important days, data on sport events, cultural events, data on social events, etc. Parking of motor vehicles is based on the behavior of people, e.g. if the weather is nice, fewer parking slots are needed, if there is a national holiday or an important day, there is also a significant change in the required number of parking slots. The same applies if there are any events in the area, with a larger number of people coming by car, or if the event takes place in an area with parking places, which they made unavailable. The advantageous version of the system may be equipped with at least one social software module for the collection of data from social networks, which collects data on scheduled events and prepares it for the use by the system when calculating the prediction.

In the advantageous version of the invention-based system in the data storage device there is stored the users' points of interest database allowing to add the information on the user's point of interest in the given area to the result of prediction of probability in the given area. It is practical, that if a user requests a prediction in the area where his/her object of interest is located, the system offers him/her not only the result of the prediction, but also notifies him/her not to miss the object of interest.

In the advantageous version of the invention-based system the prediction software module comprises a computer program for an automatic execution of the following sequential steps:
- determining the given area from the received request for prediction
- finding the given area in the map background database, to include the identification of the official number of parking slots in the given area
- finding current signalling data in the signalling data database
- identification and monitoring of the virtual entities' behavior from the signalling data
- filtering virtual entities not affecting the occupancy rate of parking slots out
- using assumption of the current actual occupancy rate of parking slots in the given area
- reviewing the actual behavior of entities in the given area with the assumption of the current actual occupancy rate of parking slots in the given area
- determining the probability of occurrence of vacant parking slots in the given area
- publishing the results of prediction of probability.

In the advantageous version of the invention-based system the system comprises a statistics software module containing a computer program for an automatic execution of the following sequential steps:
- determining the given area and uploading information on the official number of parking slots
- separating of day time into separate time periods
- uploading all archived signalling data from the given area into the signalling data database and/or data from the training database with experimentally obtained data on the actual occupancy rate of parking slots in the given area
- statistic assessment of the virtual entities' behavior in the given area for each individual period of day time
- making an assumption for the given area and for each individual period of day time
- saving the assumptions in the long-term statistics states database

In the advantageous version of the invention-based system the system comprises a social software module comprising a computer program for an automatic execution of the following sequential steps:
- connecting to at least one social network
- collecting of data on social events, sport events, cultural events
- sorting the collected data based on the given area and times of the events out
- saving the data in the supplementary data database

Among the greatest advantages of the new invention belongs the use of signalling data from the cellular telecommunication networks of mobile operators, which replaces the necessity for the use of additional hardware installed in the streets and the necessity for the provision of updating data from the actual users in the existing solutions. The system uses the correlation between the virtual entities' behavior and the occupancy rate of parking slots for calculating the results, while all information on the virtual entities' behavior are included in the signalling data. Some other advantages of the invention include that the invention is able to make the prediction results more accurate based on the statistic assessment of archived data, further on the invention enables the reception of users' feedback and adding supplementary data into the prediction calculation, while the supplementary data includes information on weather, national holidays, street closures, etc. It is also practical, that the invention is able to extract information on current events from social networks, such as cultural events, social events, sport events, and adjust the prediction results based on information on these events. Furthermore, it is practical, that the invention may add information on an object of interest, the motor vehicle driver can visit after parking while sending predictions. Adding information on an object of interest has a large commercial potential, which gives the invention additional value.

### BRIEF DESCRIPTION OF THE DRAWINGS:

The aforementioned invention will be specified in the following drawings, where:
FIG. 1 shows a diagram of the system for the prediction of probability,
FIG. 2 shows the change in number of virtual entities during the day in the area, which belongs into the residential area category,
FIG. 3 shows the change in number of virtual entities during the day in the area, which belongs into the business area category, and
FIG. 4 shows the correlation between the number of entities present in the residential area and the number of actually available parking slots.

### DETAILED DESCRIPTION:

It is understood, that the actual examples of the realization of the invention described and depicted further on serve for illustrative purposes, not limiting the invention for the listed usage. Technical experts will be able to find and provide, using routine experimentation, a larger or smaller number of equivalents to the specific realizations of the invention, which are described here. Even these equivalents will be included in the following patent demands.

The geographical area where the invention may be used can be for example the area of the capital city of Prague. This geographical area comprises both the dense urban area and high density of end devices, which are operated by mobile operators' cellular telecommunication networks. Telecommunication networks operated in the area of the capital city of Prague posses a dense network of base stations, which divide the Prague's area into sectors based on the best coverage by radio signal via individual cells coverage. In the Prague's area there are operated cellular telecommunication networks falling into the 2G, 3G, 4G and newly into 5G generations.

Signalling data from several generations of cellular telecommunication networks operated by one mobile operator are used in the invention. It is also possible to use signalling data from multiple mobile operators in the invention. Signalling data are generated for all end devices, such as for example telephones (smart and standard), IoT devices, M2M, motor vehicles equipped with end devices, while dialing or receiving telephone call, while sending or receiving SMS or MMS, during active or passive use of Internet services such as web browsing, live video or audio streaming, and other IP communication. Signalling data are also generated during routine communication between the end device and telecommunication network, e.g. regular update of the end device's position initiated by the telecommunication network.

Signalling data are copied from the telecommunication networks into the invention's signalling data database **5**, where the signalling data are archived and divided based on the individual sectors operated by dominant base stations dividing the geographical area into a mosaic of sectors with the best radio coverage.

At the same time the invention is equipped with the map background database **6** with information on the coverage of individual sectors with radio signal together with information on parking slots. Thanks to the information in the map background database **6** the invention is able to determine the capacity of parking slots in the individual sectors.

The invention defines for its operation the end devices as virtual entities from the signalling data, while monitoring behavior of these virtual entities from the signalling data. Due to the fact that the geographical area where the virtual entities are present is divided into the mosaic of sectors, it is possible to determine behavior of a virtual entity, as to whether the virtual entities stay in place or move between different places, and if so, how fast they move, and whether the movement is fluent or discontinuous, etc. This behavior of virtual entities is based on the executed research in strong correlation with the prediction of probability of occurrence of vacant parking slots.

The executed research helped to identify behavioral patterns of the virtual entities dividing them into individual categories. In this invention realization the categories are: a pedestrian, a cyclist, a motor vehicle driver, a public transport passenger, a working person, others. At the same time the research helped to determine the influence of the respective categories on the probability of occurrence of vacant parking slots. The data linked to the aforementioned are stored in the virtual entities categories database **8.**

The invention is equipped with a prediction software module **7** comprising a calculation algorithm for the prediction of probability of occurrence of vacant parking slots in the given area. The algorithm input data comprises the signalling data from the signalling data database **5** including information on the number and behavior of virtual entities in the given area, further on data with map background of the given area the prediction is supposed to be conducted for, obtained from the map background database **6,** including information on the capacity of parking slots in the given area, and data with the description of the virtual entities' categories from the virtual entities categories database **8.**

The algorithm of the prediction software module **7** is implemented in the form of a running code in the invention-based **1** system working in the real time. The system **1** can be operated using own hardware, or on a virtual platform within cloud computing.

It is obvious that in the real world there will not always be free all parking slots in the given area. To make the prediction of probability of occurrence of vacant parking slots more accurate, it is necessary to have at least approximate information on the actual number of parking slots in the given area at the time the prediction of probability has been requested.

The invention makes assumptions on the initial occupancy rate of the parking slots in the individual sectors based on the archived signalling data and from the experimental measurements of the actual state. The assumptions are made for individual times, individual days or even weeks, or even longer periods of time. The completed assumptions are stored in the long-term statistics states database.

In this example of the invention realization the assumptions catalog the constituent parts of the geographical area into categories called the residential area, which is left by virtual entities before the start of working hours and then filled again with virtual entities after working hours, then the business area, which is filled by virtual entities before the start of working hours and the entities leave after working hours, then the weekend area, which is left by virtual entities before the weekend starts and filled with virtual entities when the weekend is over, there may also be the downtown area, mixed area, etc.

The accuracy of the probability prediction may be increased by sending input data from the long-term statistics states database **10** into the prediction software module algorithm **7.** Additionally virtual entities not belonging to the motor vehicle driver category due to their behavior may be filtered out from signalling data.

In newly built systems **1** it is necessary to experimentally obtain data with the actual state of vacant parking slots in the individual sectors for various day times, whose input into the system **1** will be considered as training. These experimentally obtained data with actual state are collected for approximately one month to enable the statistics software module **9** to be more precise in determining the probability while making assumptions by considering the actual capacity of parking slots in the current time as compared with the official capacity of parking slots. After completing the system **1** training period with the experimentally obtained data with the actual state of vacant parking slots, the assumptions will undergo further automatic modification in the long-term statistic states database **10**, based on the archived behavior of the virtual entities.

In case of an abrupt change in the capacity of parking slots in the given area, e.g. a new parking building gets open, new shopping mall, street reconstruction, etc., it is necessary to conduct again the system **1** training process to update the assumptions in the long-term statistics state database **10** in order to enable the system to immediately reflect the changes while making predictions. In case the training process is not realized, the predictions will be adjusted automatically after a sufficient amount of archived signalling data reflecting the new state in the given area has been collected.

Another feature influencing the prediction is the feedback from the motor vehicle drivers' **4** user devices. The users' devices **4** have their own data storages **12** with the feedback software module **13**, through which they send data with the information on how the prediction was successful back to the system **1**. The participation of the users in providing feedback is active, but it is not required by the invention.

The invention-based system **1** may be equipped with a supplementary database **14**, with data on weather, important days and national holidays, data on street closures and prohibited parking due to street cleaning, etc. Data from the supplementary database **14** are used during calculation of the prediction.

The additional information may include information on sport events, cultural events, social events. Data may be entered into the system **1** manually, or collected automatically from social networks, such as Facebook, Twitter, etc., using the social software module **15**, which monitors these social networks permanently.

The last extension of the system **1** is the users' points of interest database **16**, which includes information on the occurrence of points of interest in the given area the user requests prediction for. The user obtains not only information on the probability of occurrence of vacant parking slots, but he/she also obtains information that if he/she parks in the given area at a given place, he/she may visit a preferred point of interest. For example, if the user likes a certain automobile brand, the system **1** offers him/her probable parking places, while at one of the proposed localities the system will suggest the user has parked just next to his favorite car brand store, which may influence the user's intentions.

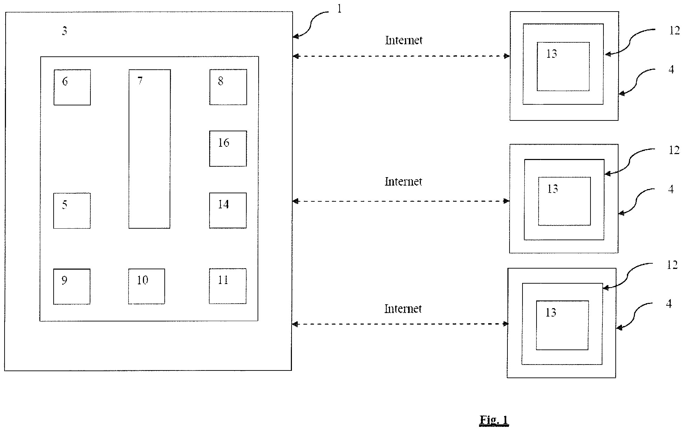

FIG. 1 shows a block diagram of fully equipped system **1**. Users' devices **4** communicate with the server **2** through the Internet. The server **2** has a data storage **3**, where the virtual components of the system **1**, such as software modules and databases are stored in.

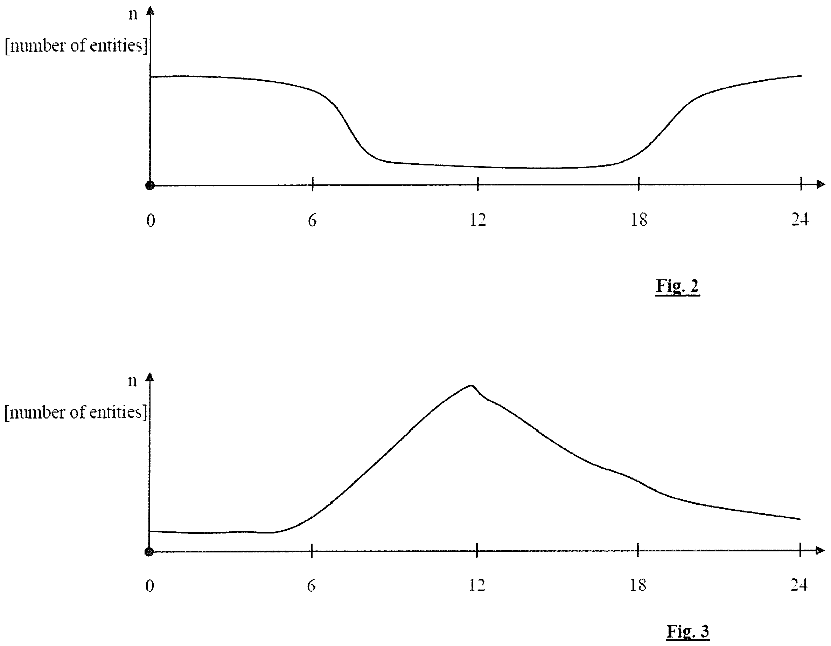

FIG. 2 shows the change in the number of virtual entities during the day in the given area which belongs into the residential area category. The number of virtual entities during standard working hours is lower. For the sake of comparison FIG. 3 shows the change in the number of virtual entities during the day in the given area, which belongs into the business area category. Where the trend is reversed and during standard working hours the number of virtual entities gets higher.

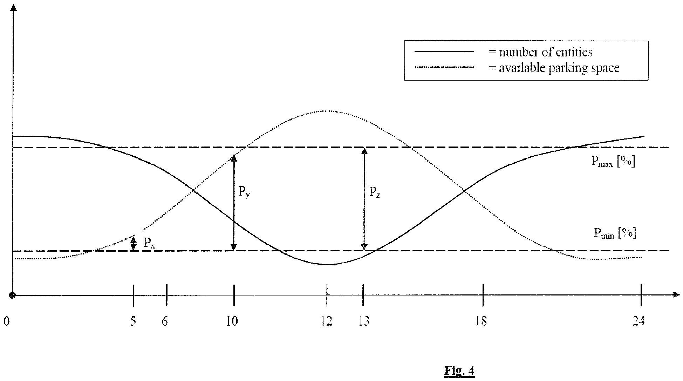

FIG. 4 shows the correlation between the number of entities present in the residential area and the number of actually available parking slots. Also the maximum and minimum limits of the probability of occurrence of vacant parking slots are set. The probability **P_{X}** at 5 AM is at low probability limit, where the parking slots in the given area are not expected to be vacant. Virtual entities are still in their homes and their motor vehicles are parked in the area. The probability **P_{Y}** of occurrence of vacant parking slots at 10 AM will be close to the maximum probability limit since the virtual entities have already left the area. The probability **PZ** has reached its maximum and it is certain it will be possible to park in the given area, because at this time the number of virtual entities in the area is at the lowest.

FIG. 4 illustrates the above mentioned assumption. The current number of virtual entities in the given area will be compared with the assumption based on the statistically processed signalling data, which consequently changes the extent of the probability limits making the prediction more accurate.

### Model situation:

The user sends a request at 2 PM on Monday for the prediction of probability of occurrence of vacant parking slots for the Cukrovarnická street area. Signalling data shows that at a given time there is a certain number of virtual entities in the given area, which do affect the occupancy rate of parking slots, then the system would calculate a high-percentage probability of occurrence of parking slots, which the system would mark with green color on the user device **4**, symbolizing trouble-free parking, then the prediction software module **7** uses the assumption for the given area, day and time, and adjusts the calculated percentage probability to a medium chance, symbolized with yellow color, due to the fact, that some entities have left their cars in the area based on the statistical processing of archived data.

In a similar situation the system sends a message to the user, that in the respective street there is street cleaning in progress, so parking there is not possible, but in the neighboring Hru 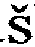 ková street the probability of occurrence of vacant parking slots is marked with yellow color, in another neighboring street the probability is symbolized with red color meaning parking is very complicated there, whereas in a street about 500 m from the Hru 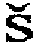 ková street the probability of parking is symbolized with green color on the user's device **4**, while in the street there is also a Traditional Chinese Medicine food supplements store.

Similarly in a different model situation, when the user is coming back to his/her hometown, he/she is notified by the system **1** by sending the probability, that he/she may not be able to park in his/her street at the given time due to an ongoing protest which the user receives information about, while the user is recommended to park for the time of the rally in a local paid parking lot.

The symbolization displaying the calculated probability percentage is completely optional, in this version of the invention, the green color symbolizes the probability of 100 % - 76 %, the yellow color symbolizes the probability of 75 % - 51 %, and the red color symbolizes 50 % - 0 % probability. Other symbolization in other versions of the invention is an outcome of the routine effort.

### Industrial applicability

The method of predicting the probability of occurrence of vacant parking slots and the system for its realization based on the invention will come in handy while seeking assistance with parking in cities covered with cellular telecommunication networks radio signal.

### Reference symbols overview

- 1: system
- 2: server
- 3: data storage device
- 4: user device
- 5: signalling data database
- 6: map background database
- 7: prediction software module
- 8: virtual entities category database
- 9: statistics software module
- 10: long-term statistics states database
- 11: training database
- 12: user device data storage
- 13: feedback software module
- 14: supplementary database
- 15: special software module
- 16: users' points of interest database

## Claims

1. The method of predicting the probability of occurrence of vacant parking slots in the given area for shortening the time required for finding a place to park a motor vehicle, where at first a request for making the prediction of probability for the given area is submitted, then the prediction of probability of occurrence of vacant parking slots is executed by comparing the official number of parking slots in the given area with the current number of persons and motor vehicles present in the area, then the result is published,
the method further comprises the
use of signalling data for making the prediction from at least one cellular radio telecommunication network as a source of information on persons and motor vehicles in the given area.

2. The method according to claim 1, further comprises
the use of signalling data from an established connection between base stations of a cellular radio telecommunication network and end devices connected to the telecommunication network, while the individual connected end devices are viewed as individual virtual entities, whose behavior is analyzed from the signalling data.

3. The method according to claim 2, further comprises
the categorization of virtual entities before the actual prediction of probability, then the signalling data from the virtual entities not affecting the probability of occurrence of vacant parking slots in the given area at the given time are filtered out still before the execution of the prediction.

4. The method according to any one of claims 1 to 3, further comprises
the use of at least one assumption of the current actual occupancy rate of parking slots in the given area in making the prediction of probability in order to make the prediction more accurate, which is made based on the statistical processing of the archived signalling data set.

5. The method according to claim 4, further comprises
the use of experimentally obtained data on the actual state of the occupancy rate of parking slots in the given area during the preparation of the assumption of the current actual occupancy rate of parking slots in the given area while the amount of archived signalling data is insufficient, for bridging the period of time required for acquiring the sufficient set of archived signalling data.

6. The method according to claim 4, further comprises
the use of experimentally obtained data on the actual state of the occupancy rate of parking slots in the given area when the assumption of the current actual occupancy rate of parking slots in the given area is devalued due to the change in the official number of parking slots in the given area, for bridging the period of time required for acquiring the sufficient set of archived signalling data.

7. The method according to any one of claims 4 to 6, further comprises
the use of feedback information from motor vehicles drivers on the results of the previous predictions of probability in the given area for making the prediction of probability more accurate when executing the prediction of probability for the given area.

8. The method according to any one of claims 1 to 7, further comprises
the use of supplementary information on the current facts affecting the behavior of persons and motor vehicles while making the prediction of probability, to make the prediction more accurate.

9. The system (1) for executing the method of prediction of probability of occurrence of vacant parking slots in a given area for shortening the time required for finding a place to park a motor vehicle; comprising at least one server (2) connected to the Internet, equipped with at least one data storage device (3) with at least one database and at least one software module, comprising at least one user device (4) connected to the Internet for the communication between the user device (4) and the server (2),
the system further comprises
at least one signalling data database (5) stored in the data storage device (3) for the receiving and archiving of signalling data from the cellular radio telecommunication network, and at least one map background database (6) comprising the geographical description of the area, out of which the given areas are selected, to include data on the official number of parking slots in the given areas, and at least one prediction software module (7) for an automatic execution of the prediction of probability of occurrence of vacant parking slots in the given area from signalling data.

10. The system according to claim 9, further comprises
a virtual entities categories database (8) stored in the data storage device (3), together with the prediction software module (7) comprising algorithm for the identification of behavior of virtual entities from signalling data.

11. The system according to claim 9 or 10, further comprises
a statistics software module (9) stored in the data storage device (3) for making assumptions on a current occupancy rate of parking slots in the given area from archived signalling data, and a long-term statistic states database (10) for saving the assumptions from the statistics software module (9).

12. The system according to claim 11, further comprises
a training database (11) stored in the data storage device (3) with experimentally obtained data on an actual state of the occupancy rate of parking slots in the given area.

13. The system according to claim 11 or 12, wherein the user device (4) is equipped with at least one data storage device (12) with the feedback software module (13) for submitting data from the users into the long-term statistics states database (10).

14. The system according to any one of claims 9 to 13, wherein the prediction software module (7) comprises a computer program for an automatic execution of the following sequential steps:
determining the given area from the received request for prediction;
finding the given area in the map background database (6) including the determination of the official number of parking slots in the given area;
finding current signalling data in the signalling data database (5) identification and monitoring of the virtual entities' behavior from the signalling data;
filtering virtual entities not affecting the occupancy rate of parking slots out;
using assumption of the current actual occupancy rate of parking slots in the given area;
reviewing the actual behavior of entities in the given area with the assumption of the current actual occupancy rate of parking slots in the given area;
determining the probability of occurrence of vacant parking slots in the given area; and
publishing the results of prediction of probability.

15. The system according to any one of claims 11 tol4, wherein the statistics software module (9) comprises a computer program for an automatic execution of the following sequential steps:
determining the given area and uploading information on the official number of parking slots;
separating of day time into separate time periods;
uploading all archived signalling data for the given area into the signalling data database (5) and/or the data from the training database (11) with the experimentally obtained data on the actual state of the occupancy rate of parking slots in the given area;
statistic assessment of the virtual entities' behavior in the given area for each individual period of day time;
making an assumption for the given area and for each individual period of day time; and
saving the assumptions into the long-term statistics states database (10).

## Amended claims

### Amended claims in accordance with Rule 137(2) EPC.

1. The method of predicting the probability of occurrence of vacant parking slots in the given area, where at first a request for making the prediction of probability for the given area is submitted, then the prediction of probability of occurrence of vacant parking slots is executed by comparing the official number of parking slots in the given area with the current number of persons and motor vehicles present in the area, then the result is published,
the method further comprises
the use of signalling data for making the prediction from at least one cellular radio telecommunication network as a source of information on persons and motor vehicles in the given area;
the use of signalling data from an established connection between base stations of a cellular radio telecommunication network and end devices connected to the telecommunication network, while the individual connected end devices are viewed as individual virtual entities, whose behavior is analyzed from the signalling data; and
the categorization of virtual entities before the actual prediction of probability, then the signalling data from the virtual entities not affecting the probability of occurrence of vacant parking slots in the given area at the given time are filtered out still before the execution of the prediction.

2. The method according to claim 1, further comprises
the use of at least one assumption of the current actual occupancy rate of parking slots in the given area in making the prediction of probability, which is made based on the statistical processing of the archived signalling data set.

3. The method according to claim 2, further comprises
the use of experimentally obtained data on the actual state of the occupancy rate of parking slots in the given area during the preparation of the assumption of the current actual occupancy rate of parking slots in the given area when the amount of archived signalling data is insufficient, for bridging the period of time required for acquiring the sufficient set of archived signalling data.

4. The method according to claim 2, further comprises
the use of experimentally obtained data on the actual state of the occupancy rate of parking slots in the given area when the assumption of the current actual occupancy rate of parking slots in the given area is devalued due to the change in the official number of parking slots in the given area, for bridging the period of time required for acquiring the sufficient set of archived signalling data.

5. The method according to any one of claims 2 to 4, further comprises
the use of feedback information from motor vehicles drivers on the results of the previous predictions of probability in the given area when executing the prediction of probability for the given area.

6. The method according to any one of claims 1 to 5, further comprises
the use of supplementary information on the current facts affecting the behavior of persons and motor vehicles while making the prediction of probability.

7. The system (1) for executing the method of claim 1 comprising
at least one server (2) connected to the Internet, equipped with at least one data storage device (3) with at least one database and at least one software module, comprising at least one user device (4) connected to the Internet for the communication between the user device (4) and the server (2),
the system further comprises
at least one signalling data database (5) stored in the data storage device (3) configured to receive and archive the signalling data from the cellular radio telecommunication network, and at least one map background database (6) comprising the geographical description of the area, out of which the given areas are selected, to include data on the official number of parking slots in the given areas, and
at least one prediction software module (7) configured to perform an automatic execution of the prediction of probability of occurrence of vacant parking slots in the given area from signalling data;
a virtual entities categories database (8) stored in the data storage device (3), together with the prediction software module (7) comprising algorithm configured to identify the behavior of virtual entities from signalling data.

8. The system according to claim 7, further comprises
a statistics software module (9) stored in the data storage device (3) configured to make assumptions on a current occupancy rate of parking slots in the given area from archived signalling data, and
a long-term statistic states database (10) configured to save the assumptions from the statistics software module (9).

9. The system according to claim 8, further comprises
a training database (11) configured to be stored in the data storage device (3) with experimentally obtained data on an actual state of the occupancy rate of parking slots in the given area.

10. The system according to claim 8 or 9, wherein the user device (4) is equipped with at least one data storage device (12) with the feedback software module (13) configured to submit data from the users into the long-term statistics states database (10).

11. The system according to any one of claims 7 to 10, wherein the prediction software module (7) comprises a computer program configured to perform an automatic execution of the following sequential steps:
determining the given area from the received request for prediction;
finding the given area in the map background database (6) including the determination of the official number of parking slots in the given area;
finding current signalling data in the signalling data database (5) identification and monitoring of the virtual entities' behavior from the signalling data;
filtering virtual entities not affecting the occupancy rate of parking slots out;
using assumption of the current actual occupancy rate of parking slots in the given area;
reviewing the actual behavior of entities in the given area with the assumption of the current actual occupancy rate of parking slots in the given area;
determining the probability of occurrence of vacant parking slots in the given area; and
publishing the results of prediction of probability.

12. The system according to any one of claims 8 to 114, wherein the statistics software module (9) comprises a computer program configured to perform an automatic execution of the following sequential steps:
determining the given area and uploading information on the official number of parking slots;
separating of day time into separate time periods;
uploading all archived signalling data for the given area into the signalling data database (5) and/or the data from the training database (11) with the experimentally obtained data on the actual state of the occupancy rate of parking slots in the given area;
statistic assessment of the virtual entities' behavior in the given area for each individual period of day time;
making an assumption for the given area and for each individual period of day time; and
saving the assumptions into the long-term statistics states database (10).
